# EUROPEAN PATENT APPLICATION

(11) **EP 1 841 038 A2**
(43) Date of publication of application: **03.10.2007**
(21) Application number: 06024419.1
(22) Date of filing: 24.11.2006
(51) Int. Cl.: H02J 7/00

(54) **Charging apparatus and charging method thereof**

(30) Priority: 28.03.2006 KR 20060027715
(71) Applicant: Samsung Gwangju Electronics Co., Ltd., Gwangju-city (KR)
(72) Inventor: Song, Jeong-gon, Gwangsan-gu Gwangju-city (KR); Jeung, Sam-jong, Gwangsan-gu Gwangju-city (KR); Lee, Ju-sang, Sanweol-dong Gwangsan-gu Gwangju-city (KR); Ko, Jang-youn, Gwangsan-gu Gwangju-city (KR); Cho, Young-ik, Gwangsan-gu Gwangju-city (KR); Lee, Hak-bong, Damyang-gun Jeollanam-do (KR)
(74) Representative: Käck, Jürgen

(57) **Abstract**

A charging apparatus having a safety circuit and a method thereof is disclosed. The charging apparatus (100) includes a charging terminal unit (110) having terminals exposed to the outside to supply a charging voltage therethrough, a voltage generating unit (120) to generate a voltage which varies as a value of resistivity of an object contacting the terminals of the charging terminal unit (110), and a control unit (130) to detect the voltage generated from the voltage generating unit (120), and to determine whether the charging voltage should be supplied through the charging terminal unit (110) on the basis of a level of the detected voltage. The charging apparatus (100) determines whether the charging voltage should be supplied, by using a voltage produced according to a value of resistivity of a mobile robot cleaner, so that it supplies the charging voltage to the mobile robot cleaner only when the mobile robot cleaner comes in contact with the terminals therewith, and it blocks the charging voltage from being supplied to a conductor or a metal object, such as metal chopsticks, when the conductor or the metal object comes in contact with the terminals therewith. Accordingly, a danger of fire or electric shock by the terminals exposed to the outside is reduced, thereby enabling only the mobile robot cleaner to safely charge.

## Description

### FIELD OF THE INVENTION

The present invention relates generally to a charging apparatus and a charging method thereof. More particularly, the present invention relates to a charging apparatus having a safety circuit and a charging method thereof.

### BACKGROUND OF THE INVENTION

A charging apparatus generally charges a storage battery, which is embodied in, for example, a mobile robot cleaner to provide electric power for carrying out a desired operation thereto. Such a charging apparatus is installed outside the mobile robot cleaner, e.g., on a lower part of a wall in a room.

The mobile robot cleaner is a device which performs cleaning work to take in dust and foreign substances from a surface to be cleaned and/or patrolling to confirm whether a door, a window, and a gas valve in a house has been opened, while automatically traveling along a working path programmed beforehand without user's manipulation.

The mobile robot cleaner receives electric power from the external charging apparatus through the storage battery installed therein, since it is difficult for it to receive the desired electric power by wire with wide range of the working path thereof. The charging apparatus usually has charging terminals exposed to the outside to charge the storage battery therethrough.

Accordingly, if a conductor or a metal object, such as metal chopsticks, comes in contact with the plus terminal and the minus terminal of the charging terminals of the charging apparatus, the charging terminals may be shorted, thereby generating gross flames or sparks. Thus, a danger exists, in that a fire or an electric shock accident may occur.

Therefore, what is needed is a technique, which only when the charging terminals of the mobile robot cleaner come in contact with the charging terminals of the charging apparatus, the storage battery of the mobile robot cleaner is charged, and when the conductor or the metal object, such as the metal chopsticks, comes in contact with the charging terminals of the charging apparatus, the charging voltage is blocked from being leaked through the charging terminals of the charging apparatus.

### SUMMARY OF THE INVENTION

An aspect of the present invention is to solve at least the above problems and/or disadvantages and to provide at least the advantages described below. Accordingly, an aspect of the present invention is to provide a charging apparatus having a safety circuit that determines whether a charging voltage should be supplied, by using a voltage produced according to a value of resistivity of an object to be charged, such as a mobile robot cleaner, so that it supplies the charging voltage to the object to be charged only when the object to be charged comes in contact with charging terminals thereof, and it blocks the charging voltage from being supplied to a conductor or a metal object, such as metal chopsticks, when the conductor or the metal object comes in contact with the charging terminals thereof, and a charging method thereof. Accordingly, a danger of fire or electric shock accident, which may be generated as a result of a short circuit of the charging terminals of the charging apparatus exposed to the outside, is reduced, thereby enabling only the object to be charged to safely charge.

According to an aspect of an exemplary embodiment of the present invention, a charging apparatus includes a charging terminal unit, a voltage generating unit, and a control unit. The charging terminal unit has terminals exposed to the outside to supply a charging voltage therethrough. The voltage generating unit generates a voltage, which varies as a value of resistivity of an object contacting the terminals of the charging terminal unit. The control unit detects the voltage generated from the voltage generating unit, and determines whether the charging voltage should be supplied through the charging terminal unit on the basis of a level of the detected voltage.

When a mobile robot cleaner comes in contact with the charging terminal unit, the voltage generating unit may generate a first voltage by a value of resistivity of the mobile robot cleaner, and when a voltage generated by the voltage generating unit is the first voltage, the control unit may control the charging voltage to supply through the charging terminal unit.

The value of resistivity of the mobile robot cleaner may be approximately 1 Kohm, and the first voltage generated by the value of resistivity of the mobile robot cleaner may be approximately 2.5V.

When the charging terminal unit is shorted, the voltage generating unit may generate a second voltage smaller than a first voltage, and when a voltage generated by the voltage generating unit is the second voltage, the control unit may control to block the charging voltage from being leaked through the charging terminal unit.

The apparatus may further include a second switch connected to the control unit to be turned on or off according to the determination of the control unit on whether the charging voltage should be supplied through the charging terminal unit, and a first switch connected to the charging terminal unit to be turned on by the object and thus to act as a passage for supplying the charging voltage to the charging terminal unit, when the second switch is turned on under the control of the control unit.

The charging voltage may be blocked from being leaked through the first switch to the charging terminal unit when the second switch is turned off under the control of the control unit due to a short-circuit of the charging terminal unit.

The second switch may include a field effect transistor (FET).

According to another aspect of an exemplary embodiment of the present invention, a charging method includes generating a voltage which varies as a value of resistivity of an object contacting terminals for supplying a charging voltage, detecting the generated voltage, and determining whether the charging voltage should be supplied on the basis of a level of the detected voltage.

The generating a voltage may include generating a first voltage by a value of resistivity of a mobile robot cleaner as the mobile robot cleaner comes in contact with the terminals, the detecting the generated voltage may include detecting the generated first voltage, and the determining whether the charging voltage should be supplied may include determining to supply the charging voltage when the generated first voltage is detected.

The value of resistivity of the mobile robot cleaner may be approximately 1 Kohm, and the first voltage generated by the value of resistivity of the mobile robot cleaner may be approximately 2.5V.

The generating a voltage may include generating a second voltage by a short-circuit of the terminals generated as a result of a contact of a metal object therewith, the detecting the generated voltage may include detecting the generated second voltage, and the determining whether the charging voltage should be supplied may include determining to block the charging voltage from being leaked when the generated second voltage is detected..

The method may further include turning a second switch on or off according to the determination on whether the charging voltage should be supplied, and causing a first switch connected to the terminals to be turned on by the object, so as to enable the first switch to act as a passage for supplying the charging voltage to the terminals when the second switch is turned on.

The second switch may include a field effect transistor (FET).

### BRIEF DESCRIPTION OF THE DRAWING FIGURES

The above aspect and other features of the present invention will become more apparent by describing in detail exemplary embodiments thereof with reference to the attached drawing figures, wherein;

FIG 1 is a block diagram of a charging apparatus having a safety circuit in accordance with an exemplary embodiment of the present invention;

FIG 2 is a circuit diagram of the charging apparatus having the safety circuit in accordance with the exemplary embodiment of the present invention;

FIG 3 is a perspective view exemplifying practical application of the charging apparatus in accordance with the exemplary embodiment of the present invention; and

FIG 4 is a flow chart exemplifying a charging method of the charging apparatus in accordance with the exemplary embodiment of the present invention.

Throughout the drawings, the same drawing reference numerals will be understood to refer to the same elements, features, and structures.

### DETAILED DESCRIPTION OF THE EXEMPLARY EMBODIMENTS

The matters defined in the description such as a detailed construction and elements are provided to assist in a comprehensive understanding of the embodiment of the invention and are merely exemplary. Accordingly, those of ordinary skill in the art will recognize that various changes and modifications of the embodiment described herein can be made without departing from the scope and spirit of the invention. Also, descriptions of well-known functions and constructions are omitted for clarity and conciseness.

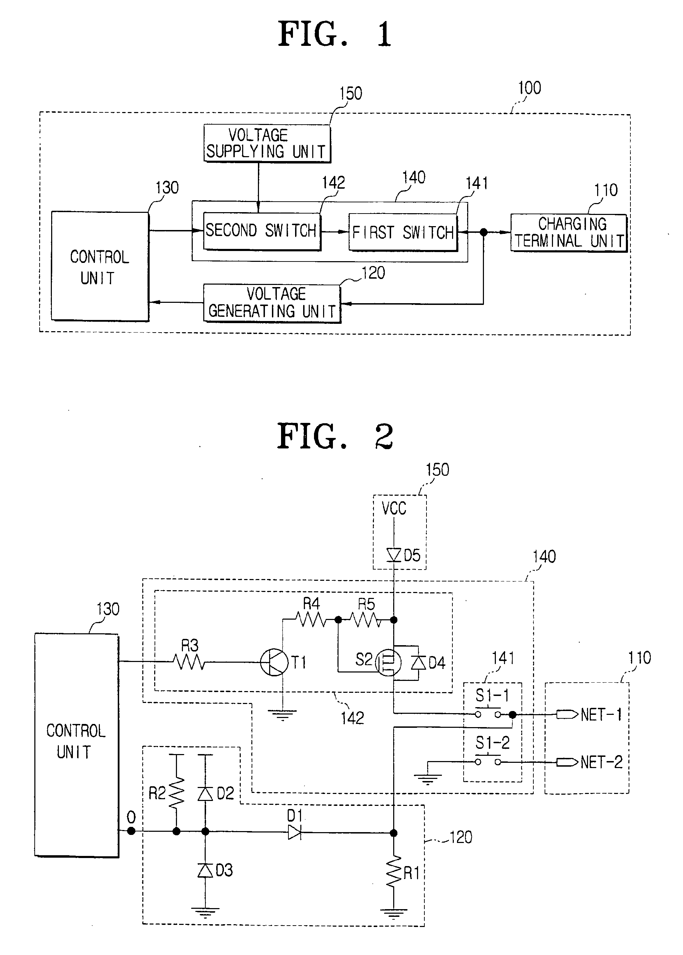

FIG 1 is a block diagram exemplifying a charging apparatus having a safety circuit in accordance with an exemplary embodiment of the present invention.

Referring to FIG 1, the charging apparatus 100 in accordance with the exemplary embodiment of the present invention includes a charging terminal unit 110, a voltage generating unit 120, a control unit 130, a switching unit 140, and a voltage supplying unit 150. The switching unit 140 forms a safety circuit, and is provided with a first switch 141 and a second switch 142.

In the drawing, components except for essential elements, which are included in the charging apparatus 100 in accordance with the exemplary embodiment of the present invention, are not illustrated for clarity and conciseness.

The charging terminal unit 110 has charging terminals exposed to the outside to supply a charging voltage therethrough. The charging terminals include a plus terminal and a minus terminal.

To be more specific, when an object comes in contact with the charging terminals of the charging terminal unit 110 exposed to the outside, the first switch 141, which is connected to the exposed charging terminals, is pushed down and thereby turned on to supply the charging voltage. Such an operation of the-first switch 141 will-be described below.

The voltage generating unit 120 generates a voltage, which varies as a value of resistivity of the object contacting the charging terminals of the charging terminal unit 110.

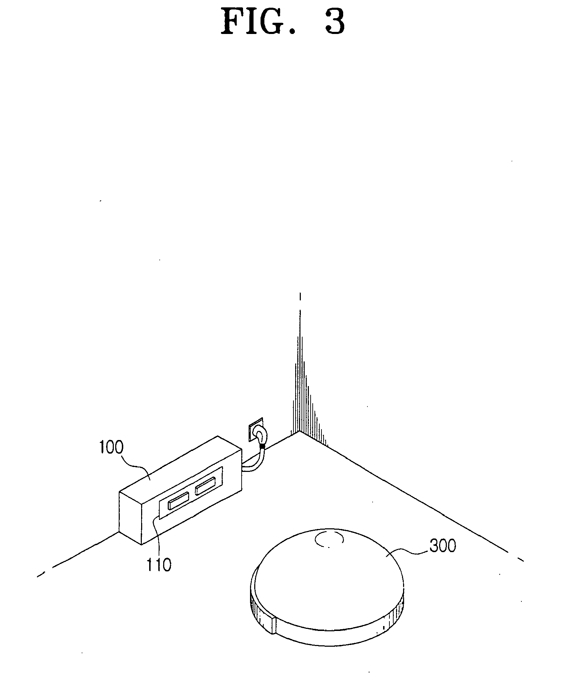

To be more specific, if the object contacting the charging terminals of the charging terminal unit 110 is a mobile robot cleaner 300 (see FIG. 3), the voltage generating unit 120 generates a first voltage corresponding to a value of resistivity of the mobile robot cleaner 300. For instance, when a value of resistivity of the mobile robot cleaner 300 is approximately 1 Kohm, the first voltage generated by the value of resistivity of the mobile robot cleaner 300 may be approximately 2.5V.

If the object contacting the charging terminals of the charging terminal unit 110 is an object other than the mobile robot cleaner 300, that is, if the charging terminal unit 110 is shorted by a contact of this object, the voltage generating unit 120 generates a second voltage smaller than the first voltage. For instance, if a conductor or a metal object, such as metal chopsticks, comes in contact with the charging terminals of the charging terminal unit 110, the voltage generating unit 120 generates a voltage of nearly 0 V due to a voltage distribution by the conductor or the metal object. Such an operation of the voltage generating unit 120 will be described below.

The control unit 130 detects a voltage generated from an output end O (see FIG 2) of the voltage generating unit 120, and determines whether the charging voltage should be supplied through the charging terminal unit 110 on the basis of a level of the detected voltage.

To be more specific, when the voltage generating unit 120 generates the first voltage at the output end O thereof due to the value of resistivity of the mobile robot cleaner 300 contacting the charging terminal unit 110, the control unit 130 detects the first voltage, and controls the charging voltage to supply to the mobile robot cleaner 300. In addition, when the conductor or the metal object, such as the metal chopsticks, comes in contact with the charging terminal unit 110 to short it and thereby the voltage generating unit 120 generates the second voltage at the output end thereof, the control unit 130 detects the second voltage, and controls to block the charging voltage from being leaked.

The supply and block mechanism of the charging voltage as described above is carried out by a series of operations by which the control unit 130 controls the second switch 142 and which will be described below.

The switching unit 140 is turned on or off under the control of the control unit 130, so that it acts as a switch to supply or block the charging voltage. The switching unit 140 includes a first switch 141 and a second switch 142.

The second switch 142 is connected to the control unit 130, and is turned on or off according to the determination of the control unit 130 on whether the charging voltage should be supplied. To be more specific, when a voltage generated at the output end O of the voltage generating unit 120 is approximately 2.5 V, the control unit 130 turns on the second switch 142 to supply the charging voltage to the mobile robot cleaner 300, and when the charging terminal unit 110 is shorted by the contact of the conductors or the metal objects and thereby a voltage generated at the output end of the voltage generating unit 120a is nearly 0 V, the control unit 130 turns off the second switch 142 to block the charging voltage from being leaked.

The second switch 142 includes a field effect transistor (FET) S2 (see FIG 2).

The first switch 141 is connected to the second switch 142 and the charging terminal unit 110, and acts as a passage for supplying the charging voltage to the charging terminal unit 110, when the second switch 142 is turned on under the control of the control unit 130.

In addition, the first switch 141 is pushed down and thus turned on to form a circuit when the mobile robot cleaner 300, or the metal object or the conductor comes in contact therewith. Since the first switch 141 is maintained at a state, at which it is not pushed down, in an early stage before the mobile robot cleaner 300, or the metal object or the conductor does not come in contact therewith, there is no danger of spark generation or electric shock accident by the charging terminals exposed to the outside.

The voltage supplying unit 150 functions to supply the charging voltage when the second switch 142 is turned on under the control of the control unit 130.

As previously noted, the charging apparatus 100 in accordance with the exemplary embodiment of the present invention turns on the second switch 142 to supply the charging voltage only when the mobile robot cleaner 300 comes in contact with the charging terminal unit 110 and thus the voltage generating unit 120 generates the voltage of approximately 2.5V at the output end O thereof due to the value of resistivity, i.e., approximately 1Kohm; of the mobile robot cleaner 300. Accordingly, the spark generation or the electric shock accident, which may be generated as a result of the contact of the conductor or the metal object, such as the metal chopsticks with the charging terminals, is prevented.

FIG 2 is a circuit diagram exemplifying the charging apparatus having the safety circuit in accordance with the exemplary embodiment of the present invention.

Referring to FIGS. 1 and 2, when an object comes in contact with the charging terminals NET-1 and NET-2 of the charging terminal unit 110 exposed to the outside, sub-switches S1-1 and S1-2 forming the first switch 141 are pushed down and turned on.

If the object contacting the exposed charging terminals NET-1 and NET-2 of the charging terminal unit 110 is the mobile robot cleaner 300, the voltage generating unit 120 generates the voltage of approximately 2.5V at the output end O thereof due to the voltage distribution by a resistance R1 and the value of resistivity (approximately 1Kohm) of the mobile robot cleaner 300.

If the object contacting the exposed charging terminals NET-1 and NET-2 of the charging terminal unit 110 is the conductor or the metal object, such as the metal chopsticks, the voltage generating unit 120 generates the voltage of approximately 0 V at the output end O thereof due to the voltage distribution of the resistance R1.

Also, if there is no object contacting the exposed charging terminals NET-1 and NET-2 of the charging terminal unit 110, an early voltage, i.e., a voltage of 5 V, is inputted to the output end O of the voltage generating unit 120. Since the early voltage of 5 V arrives at the exposed charging terminals NET-1 and NET-2 via a resistance R2 and etc., a weak current of approximately several mAs flows in the exposed charging terminals NET-1 and NET-2. Accordingly, there is no danger of the spark generation or the electric shock accident at the exposed charging terminals NET- 1 and NET-2.

As described above, as the voltage generating at the output end O of the voltage generating unit 120 varies as the objects, which come in contact with the exposed charging terminals NET-1 and NET-2 of the charging terminal unit 110, the control unit 130 can detect whether the object contacting the exposed charging terminals NET-1 and NET-2 is the mobile robot cleaner 300, and thus determine whether the charging voltage should be supplied, by the voltage generating at the output end O of the voltage generating unit 120.

Namely, it shows that the object contacting the exposed charging terminals NET-1 and NET-2 of the charging terminal unit 110 is the mobile robot cleaner 300 when the voltage generated at the output end O of the voltage generating unit 120 is approximately 2.5 V. Accordingly, the control unit 130 turns the FET S2 of the second switch 142 on.

To be more specific, when the voltage generating unit 120 generates the voltage of approximately 2.5 V at the output end O thereof, the control unit 130 detects the voltage of approximately 2.5 V, and produces a signal for turning the FET S2 on. When the produced signal is transferred to a transistor T1 via a resistance R3, the transistor T1 is turned on and operated, so that the produced signal is transferred to the FET S2 via resistances R4 and R5. As the FET S2 is turned on by the produced signal, a charging voltage stored in the voltage supplying unit 150 is transferred to the exposed charging terminals NET-1 and NET-2 of the charging terminal unit 110 through the FET S2 and the first switch 141. As a result, the mobile robot cleaner 300, charging terminals of which come in contact with the exposed charging terminals NET-1 and NET-2 of the charging terminal unit 110, is charged.

Also, it shows that the exposed charging terminals NET-1 and NET-2 of the charging terminal unit 110 are shorted by the conductor or the metal object, such as the metal chopsticks, when the voltage generated at the output end O of the voltage generating unit 120 is approximately 0 V. Accordingly, the control unit 130 turns off the FET S2 of the second switch 142.

To be more specific, when the control unit 130 detects the voltage of approximately 0 V generated at the output end O of the voltage generating unit 120, it produces a signal for turning the FET S2 off. When the produced signal is transferred to the FET S2 via the resistance R3, the transistor T1, and the resistances R4 and R5, the FET S2 is turned off. As a result, the charging voltage is blocked from being transferred from the voltage supplying unit 150 through the FET S2 to the first switch 141. Thus, the charging voltage is blocked from being leaked to the conductor or the metal object through the exposed charging terminals NET-1 and NET-2 of the charging terminal unit 110.

FIG 3 is a perspective view exemplifying practical application of the charging apparatus in accordance with the exemplary embodiment of the present invention.

Referring to FIGS. 1 through 3, if the mobile robot cleaner 300 needs an electric charging, it moves toward the charging terminal unit 110 of the charging apparatus 100, as illustrated in FIG. 3. When the mobile robot cleaner 300 comes in contact with the charging terminal unit 110 of the charging apparatus 100, the early voltage of approximately 5 V inputted to the output end O of the voltage generating unit 120 is distributed by the inner resistance R2 of the charging apparatus 100 and the resistivity of 1Kohm of the mobile robot cleaner 300. As a result, the voltage generating unit 120 generates the voltage of approximately 2.5 V at the output end O thereof.

The control unit 130 turns the second switch 142 on to supply the charging voltage only when the voltage generating unit 120 generates the voltage of approximately 2.5 V at the output end O thereof. A series of operations of the second switch 142 are described above. That is, the electric charging is carried out only when the mobile robot cleaner 300 comes in contact with the charging terminal unit 110, as illustrated in FIG. 3. Thus, when the charging terminal unit 110 is shorted by the contact of the conductor or the metal object therewith, a danger of spark generation or electric shock accident by a leakage of the charging voltage is prevented.

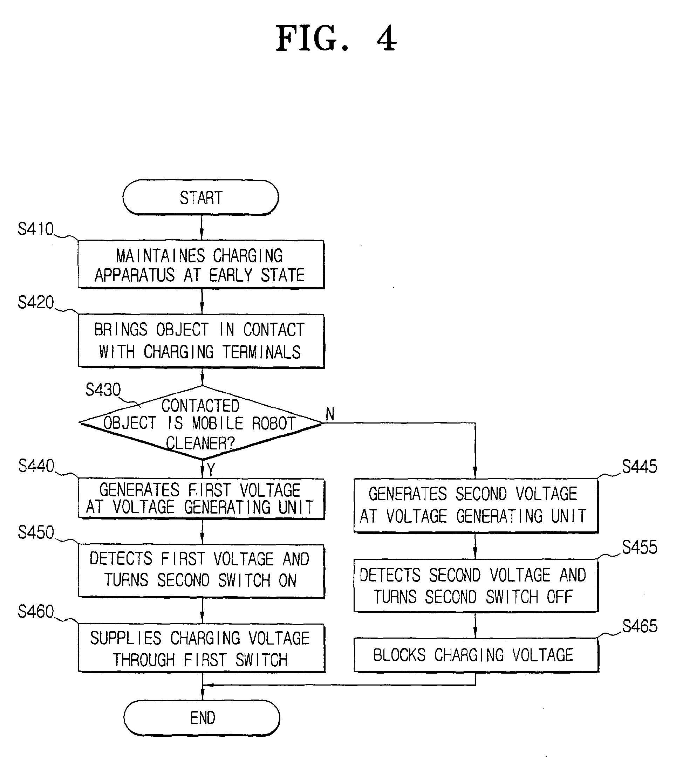

FIG 4 is a flow chart exemplifying a charging method of the charging apparatus in accordance with the exemplary embodiment of the present invention.

Referring to FIGS. 1 through 4, the charging apparatus 100 is maintained at an early state (S410). Here, the early state means a state that any object does not come in contact with the exposed charging terminals NET-1 and NET-2 of the charging terminal unit 110. Accordingly, the sub-switches S1-1 and S1-2 of the first switch 141 connected to the exposed charging terminals NET-1 and NET-2 are not pushed down to be switched on, so that there is no danger of the spark generation or the electric shock accident at the exposed charging terminals NET- 1 and NET-2.

That is to say, if there is no object contacting the exposed charging terminals NET-1 and NET-2 of the charging terminal unit 110, the weak current of approximately several mAs flows in the exposed charging terminals NET-1 and NET-2 since the early voltage of approximately 5 V arrives at the exposed charging terminals NET-1 and NET-2 via the resistance R2 and etc. Accordingly, there is no danger of the spark generation or the electric shock accident.

And then, an object comes in contact with the exposed charging terminals NET-1 and NET-2 of the charging terminal unit 110 (S420). At this time, if the contacted object is the mobile robot cleaner 300 (S430), the voltage generating unit 120 generates the first voltage of approximately 2.5 V at the output end O thereof due to the value of resistivity (approximately 1 Kohm) of the mobile robot cleaner 300 (S440).

Namely, if the mobile robot cleaner 300 comes in contact with the exposed charging terminals NET-1 and NET-2, the voltage generating unit 120 generates the first voltage of approximately 2.5 V at the output end O thereof due to the voltage distribution by the resistance R1 and the value of resistivity (approximately 1 Kohm) of the mobile robot cleaner 300.

The control unit 130 detects the first voltage and turns the second switch 142 on (S450).

To be more specific, if the mobile robot cleaner 300 comes in contact with the exposed charging terminals NET-1 and NET-2 and thereby the voltage generating unit 120 generates the first voltage of approximately 2.5 V at the output end O thereof due to the value of resistivity of the mobile robot cleaner 300, the control unit 130 detects the first voltage and produces a signal for turning the second switch 142 on so as to supply the charging voltage to the mobile robot cleaner 300. Here, the produced signal is transferred to the FET S2 via the resistance R3, the transistor T1 and the resistances R4 and R5, so that the second switch 142 is turned on.

The voltage supplying unit 150 supplies the charging voltage through the first switch 141 (S460).

To be more specific, when the second switch 142 is turned on, the voltage supplying unit 150 supplies the charging voltage through the first switch 141 to the mobile robot cleaner 300, which comes in contact with the exposed charging terminals NET- 1 and NET-2, to charge it.

On the other hands, at the step S430, if the contacted object is not the mobile robot cleaner 300, that is, if the conductor or the metal object, such as the chopsticks, comes in contact with the exposed charging terminals NET- 1 and NET-2 to short the charging terminal unit 110, the voltage generating unit 120 generates the second voltage smaller than the first voltage at the output end O thereof (S445). Here, the second voltage is approximately 0 V.

To be more specific, when the conductors or the metal objects come in contact with the exposed charging terminals NET-1 and NET-2, the voltage generating unit 120 generates the second voltage of approximately 0 V at the output end O thereof due to the voltage distribution by the resistance R1 and inner resistance of the conductor or the metal object.

The control unit 130 detects the second voltage and turns the second switch 142 off (S455).

To be more specific, when the control unit 130 detects the second voltage of nearly 0 V generated at the output end O of the voltage generating unit 120, it produces a signal for turning the FET S2 of the second switch 142 off.

When the produced signal is transferred to the FET S2 via the resistance R3, the transistor T1 and the resistances R4 and R5, the FET S2 is turned off to block the charging voltage from the voltage supplying unit 150 (S465).

More specifically, when the second switch 142 is turned off, the charging voltage is blocked from being transferred from the voltage supplying unit 150 through the FET S2 to the first switch 141. Thus, the charging voltage is blocked from being leaked to the conductor or the metal object through the exposed charging terminals NET-1 and NET-2 of the charging terminal unit 110.

As apparent from the foregoing description, according to the exemplary embodiment of the present invention, the charging apparatus determines whether the charging voltage should be supplied, by using the voltage produces according to the value of resistivity of the mobile robot cleaner, so that it supplies the charging voltage to the mobile robot cleaner only when the mobile robot cleaner comes in contact with the charging terminals therewith, and it blocks the charging voltage from being supplied to the conductor or the metal object, such as the metal chopsticks, when the conductor or the metal object comes in contact with the charging terminals therewith. Accordingly, the danger of fire or electric shock accident by the charging terminals exposed to the outside is reduced, thereby enabling only the mobile robot cleaner to safely charge.

The foregoing embodiment and advantages are merely exemplary and are not to be construed as limiting the present invention. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A charging apparatus comprising:
a charging terminal unit (110) having terminals exposed to an outside of the charging apparatus (100) to supply a charging voltage therethrough;
a voltage generating unit (120) configured to generate a voltage which varies as a value of resistivity of an object contacting the terminals of the charging terminal unit (110); and
a control unit (130) to detect the voltage generated from the voltage generating unit (120), and to determine whether the charging voltage should be supplied through the charging terminal unit (110) on a basis of a level of the detected voltage.

2. The apparatus of claim 1, wherein the voltage generating unit (120) generates a first voltage based on a value of resistivity of a mobile robot cleaner (300) when the mobile robot cleaner comes in contact with the charging terminal unit (110), and the control unit (130) controls the charging voltage supplied through the charging terminal unit (110) when a voltage generated by the voltage generating unit (120) is the first voltage.

3. The apparatus of claim 2, wherein the value of resistivity of the mobile robot cleaner (300) is approximately 1 Kohm, and the first voltage generated by the value of resistivity of the mobile robot cleaner (300) is approximately 2.5V.

4. The apparatus of claim 2 or 3, wherein the voltage generating unit (120) generates a second voltage, smaller than a first voltage, when the charging terminal unit (110) is shorted, and the control unit (130) blocks the charging voltage from being leaked through the charging terminal unit (110) when a voltage generated by the voltage generating unit (120) is the second voltage.

5. The apparatus of any of claims 1 to 4, further comprising:
a second switch (142) connected to the control unit (130) to be turned on according to a determination of the control unit (130) on whether the charging voltage should be supplied through the charging terminal unit (110); and
a first switch (141) connected to the charging terminal unit (110) to be turned on by the object and thus to act as a passage for supplying the charging voltage to the charging terminal unit (110), when the second switch (142) is turned on under the control of the control unit (130).

6. The apparatus of claim 5, wherein the charging voltage is blocked from being leaked through the first switch (141) to the charging terminal unit (110) when the second switch (142) is turned off under the control of the control unit (130) with a short-circuit of the charging terminal unit (110).

7. The apparatus of claim 5 or 6, wherein the second switch (142) comprises a field effect transistor (FET).

8. A charging method, comprising the steps of:
generating a voltage which varies as a value of resistivity of an object contacting terminals (NET-1, NET-2) for supplying a charging voltage;
detecting the generated voltage; and
determining whether the charging voltage should be supplied on a basis of a level of the detected generated voltage.

9. The method of claim 8, wherein the generating a voltage comprises generating a first voltage based on a value of resistivity of a mobile robot cleaner (300) as the mobile robot cleaner (300) comes in contact with the terminals (NET-1, NET-2), the detecting the generated voltage comprises detecting the generated first voltage, and the determining whether the charging voltage should be supplied comprises determining to supply the charging voltage when the generated first voltage is detected.

10. The method of claim 9, wherein the value of resistivity of the mobile robot cleaner (300) is approximately 1 Kohm, and the first voltage generated by the value of resistivity of the mobile robot cleaner (300) is approximately 2.5V.

11. The method of any of claims 8 to 10, wherein the generating a voltage comprises generating a second voltage by a short-circuit of the terminals (NET-1, NET-2) generated as a result of a contact of a metal object therewith, the detecting the generated voltage comprises detecting the generated second voltage, and the determining whether the charging voltage should be supplied comprises determining to block the charging voltage from being leaked when the generated second voltage is detected.

12. The method of any of claims 8 to 11, further comprising:
turning a second switch (142) on according to a determination on whether the charging voltage should be supplied; and
causing a first switch (141) connected to the terminals (NET-1, NET-2) to be turned on by the object, so as to enable the first switch (141) to act as a passage for supplying the charging voltage to the terminals, when the second switch (142) is turned on.

13. The method of claim 12, wherein the second switch (142) comprises a field effect transistor (FET).

14. A method of charging a mobile robot cleaner (300), comprising the step of:
determining a resistivity of an object contacting terminals (NET-1, NET-2);
determining whether a charging voltage should be supplied to the object when the resitivity of the object is approximately a resistivity of the mobile robot cleaner (300); and
charging the mobile robot cleaner (300) when the charging voltage is determined to be supplied.

15. The method of claim 14, wherein the resistivity of the mobile robot cleaner (300) is approximately 1 Kohm, and the charging voltage generated by the resistivity of the mobile robot cleaner (300) is approximately 2.5V.

16. The method of claim 14 or 15, wherein the step of determining a resistivity of an object contacting terminals (NET-1, NET-2) comprises determining whether a short-circuit of the terminals has occured, and the step of determining whether the charging voltage should be supplied comprises blocking the charging voltage from being leaked.
